# EUROPÄISCHE PATENTSCHRIFT

(11) **EP 2 568 244 B1**
(45) Veröffentlichungstag und Bekanntmachung des Hinweises auf die Patenterteilung: **21.01.2015**
(21) Anmeldenummer: 12006269.0
(22) Anmeldetag: 05.09.2012
(51) Int. Cl.: F27B 9/02, F27B 9/30, F27B 9/38, F27B 9/39, F27B 17/00

(54) **Verfahren und Vorrichtung zum Brennen von keramischen Formlingen und Ofen**
Method and device for firing ceramic blanks and oven
Procédé et appareil de cuisson d'ébauches en céramique et four

(30) Priorität: 12.09.2011 DE 102011112838
(43) Veröffentlichungstag der Anmeldung: 13.03.2013
(73) Patentinhaber: Keller HCW GmbH, 49479 Ibbenbüren-Laggenbeck (DE)
(72) Erfinder: Gausmann, Heiner, 49205 Hasbergen (DE); Heitmann, Peter, 48612 Horstmar (DE); Hüsing, Rainer, 48480 Spelle (DE)
(74) Vertreter: Wischmeyer, André

(56) Entgegenhaltungen:
- WO-A1-01/71265
- DE-A1- 3 117 828
- DE-A1- 3 437 237
- DE-A1- 19 934 122
- DE-B- 1 177 541
- FR-A1- 2 472 151

## Beschreibung

Die vorliegende Erfindung betrifft ein Verfahren zum Brennen von keramischen Formlingen, insbesondere von Ziegeln, in einem Ofen und durch Führen einer Mehrzahl von in parallel zueinander verlaufenden (Ofen-)Zügen befindlichen Formlingen entlang einer längsverlaufenden Ofenstrecke S mit einer Brennzone, in der eine Erhitzung der Formlinge stattfindet, wobei während eines Bewegungsvorgangs nebeneinander angeordnete Züge in entgegengesetzte Richtungen A, B verfahren und die Bestückung des Ofens mit in einer ersten Richtung A zu bewegenden Formlingen erfolgt. Darüber hinaus betrifft die Erfindung einen Ofen zum Brennen von keramischen Formlingen, insbesondere von Ziegeln, mit einer Mehrzahl von parallel zueinander und entlang einer längsverlaufenden Ofenstrecke S bewegbaren, mehrere Ofenwagen umfassenden Zügen, auf denen die Formlinge anzuordnen sind, wobei die Ofenstrecke eine Brennzone zur Erhitzung der Formlinge aufweist und wobei nebeneinander angeordnete Züge in entgegengesetzten Richtungen A, B bewegbar sind und der Ofen auf einer ersten Seite der Ofenstrecke zur Bestückung des Ofens mit in einer ersten Richtung A zu bewegenden Formlingen ausgebildet ist.

Ein Gegenstand nach dem Oberbegriff des Anspruchs 1 ist aus der DE 44 42 850 A1 bekannt. Durch die zur Umsetzung der Formlinge in der Brennzone mit dem Ziel der Richtungsumkehr zu verwendende Technik ist ein gattungsgemäßer Ofen aufwendig zu konstruieren und störungsanfällig. Gleiches gilt für die verwendete Kühlluftzuführung.

Aus der WO 01/71265 A1 ist ein Gegenstand nach dem Oberbegriff des Anspruchs 1 gezeigt, in dem sich unmittelbar an die Brennzone anschließende Zonen mit einer Querumwälzung der im Ofen befindliche Luft anschließen.

Entsprechende Querumwälzungszonen sind auch aus der DE 34 37 237 A1 entnehmbar, wobei dort die in entgegengesetzte Richtungen verlaufenden Ofenzüge zusätzlich durch eine Mittelwand 3 voneinander getrennt sind.

Es ist Aufgabe der vorliegenden Erfindung, ein vorbezeichnetes Verfahren bzw. einen vorbezeichneten Ofen störungsunanfälliger und insgesamt energiesparender auszubilden.

Die vorstehende Aufgabe wird durch ein erfindungsgemäßes Verfahren gemäß Anspruch 1 sowie einen erfindungsgemäßen Gegenstand gemäß Anspruch 10 gelöst.

Das erfindungsgemäße Verfahren zeichnet sich dadurch aus, dass auf einer der ersten Seite und bezüglich der Brennzone gegenüberliegenden zweiten Seite der Ofenstrecke eine Bestückung der in die entgegengesetzte, zweite Richtung B zu bewegenden Formlinge erfolgt, die Formlinge jeweils unter Verzicht auf eine Richtungsumkehr auf ihren jeweiligen Ofenzügen durch die Brennzone hindurchbewegt und jeweils am bezüglich ihrer Bestückung entgegengesetzten Ende der Ofenstrecke dieser entnommen werden. Durch die auf beiden Seiten der Brennzone jeweils aneinander vorbeibewegten bzw. während der Standzeiten nebeneinander verharrenden Formlinge wird die von den bereits die Brennzone verlassenden Formlingen abgegebene Energie zur Erwärmung und Erhitzung der noch nicht in die Brennzone gelangten Formlinge verwendet. Es erfolgt keine Richtungsumkehr in der Brennzone, so dass diese lediglich durchlaufen werden muss. Entsprechend ist der konstruktive Aufwand im Bereich der Brennzone verringert. Die Vorrichtung ist weniger störungsanfällig. Obgleich die Ofenstrecke insbesondere geradlinig ausgebildet ist und auf eine Querversetzung in der Brennzone verzichtet wird, kann in Abhängigkeit der gewünschten Ofenwagenführung auch eine beispielsweise geringfügige Zusammenführung oder Auseinanderführung von Formlingen in einer verschmälerten oder aufgeweiteten Brennzone realisiert werden.

Durch den Verzicht auf eine Richtungsumkehr bzw. Umsetzung in der Brennzone wird der zur Verfügung stehende Platz optimal ausgenutzt. Die Umsetzung der Ofenwagen außerhalb der Brennzone kann langfristig schneller als im vorbezeichneten Stand der Technik innerhalb der Brennzone erfolgen, was wiederum Energie spart. Der erfindungsgemäße Ofen hat auch hierdurch einen höheren Durchsatz als der aus dem Stand der Technik bekannte. Es kann im Hochtemperaturbereich des Ofens auf eine komplexe und mithin anfällige Umsetztechnik verzichtet werden.

Beim erfindungsgemäßen Verfahren werden in sich entlang der Ofenstrecke auf beiden Seiten der Brennzone anschließenden, insbesondere jeweils mehrere Ofenwagen langen Strahlungszonen die noch vor der Brennzone befindlichen Formlinge eines Zuges durch Strahlungswärme der bereits aus der Brennzone heraus gekommenen Formlinge des benachbarten und sich in entgegengesetzter Richtung bewegenden Ofenzuges erhitzt. Dasselbe gilt für einen auf zwei Seiten von in die entgegengesetzte Richtung bewegbaren Ofenzügen begrenzten Ofenzug. Unter Ofenwagen ist hierbei jegliche Art von Formlingstransportmittel zu verstehen. Beispielsweise kann es sich um einen Schlitten oder Formlingsträger handeln.

Bevorzugt werden die Formlinge in der Brennzone durch zumindest ein in einer Längsgasse zwischen den Zügen angeordnetes Heiz- bzw. Brennelement erhitzt. Hierdurch kann die verwendete Heizenergie direkter zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen.

In einer weiteren Ausbildung des erfindungsgemäßen Verfahrens werden die Formlinge in der Brennzone durch zumindest ein oberhalb der Längsgassen angeordnetes Heizelement erhitzt. Eine solche Ausbildung ist insbesondere mit einer gerichteten Abgabe von Heizenergie in die Längsgassen zwischen den Ofenzügen hinein von Vorteil, wenn in den Längsgassen zu wenig Platz für Heizelemente zur Verfügung steht. Diese sind dann vorzugsweise direkt oberhalb der Längsgassen angeordnet.

Vorteilhafterweise erfolgt die Erhitzung der (noch nicht gebrannten) Formlinge unter Verzicht von entlang der Ofenstrecke durch die Brennzone hindurch geführter (erhitzter) Kühlluft. Dies führt zu einer großen Energieeinsparung, da Wärmeverluste durch abgeführte Kühlluft vermieden werden. Unter Kühlluft wird hierbei Luft verstanden, die bei bekannten Ofen eingeblasen wird, um bereits gebrannte Formlinge zu kühlen, deren Wärme aufzunehmen und diese Wärme nach der Brennzone an die noch nicht gebrannten Formlinge abzugeben. Kühlluft umfasst nicht Sekundärluft, die zwecks Anreicherung des Sauerstoffgehalts im Rauchgas/Luft-Gemisch z.B. zur Herstellung einer bestimmten Ziegelfarbe zugeführt wird. Die Kühlung der bereits gebrannten Formlinge erfolgt ebenfalls unter Verzicht auf Kühlluft sondern durch Wärmeabgabe an die trockenen Formlinge.

Durch die Brennzone hindurch erfolgt somit keine gezielte Kühlluftführung und die vom Luft/Rauchgas-Gemisch in der Strahlungszone transportierbare Wärme ist vernachlässigbar. Gegenüber mit Kühlluft arbeitenden Tunnelöfen liegt die Energieeinsparung bei bis zu 40%. Durch den Verzicht auf Kühlluftsysteme ist der Ofen darüber hinaus günstiger herstellbar und weniger wartungsanfällig.

Besonders vorteilhaft ist die Verwendung von beidseits der Brennzone befindlichen Umwälzzonen, in denen die Luft quer zur Ofenstreckungslängsrichtung umgewälzt wird mit dem Ziel, eine Temperaturgleichverteilung bei den auf den Ofenwagen befindlichen Formlingen zu bewirken. Die Rate der querumgewälzten Luft ist bevorzugt deutlich größer als die der längs der Ofenstrecke bewegten Luft, wobei unter im Ofen befindlicher Luft vor- und nachstehend ein Rauchgas oder ein Rauchgas-/Luft-Gemisch bzw. Gasgemisch zu verstehen ist. Letzteres setzt sich zusammen aus den gegebenenfalls im Verbrennungsprozeß entstehenden Rauchgasen, etwaiger zur Anreicherung von Sauerstoff auf z.B. 10% bis 15% zugeführter Sekundärluft, sowie durch etwaige seitliche Schleusen gegebenenfalls in die Ofenstrecke gelangter Luft. Das Verhältnis von quer umgewälzten Gasmassenstrom zum längs der Ofenstrecke gerichteten Gasmassenstrom ist vorzugsweise >10, noch bevorzugter >25 sowie besonders bevorzugt >50. Durch die großen Unterschiede im Gasmassenstrom längs und quer zur Ofenstrecke wird deutlich, dass nur ein geringer Gasmassenstrom in Längsrichtung der Ofenstrecke vorhanden ist. Entsprechend wird nur wenig Wärme bei der Absaugung des Rauchgas-/Luftgemisches verloren. In den Umwälzzonen wird durch die starke Umwälzung der Luft eine Gleichverteilung der Temperatur über den gesamten Besatz aller parallel zueinander befindlichen Ofenzüge mit den zu kühlenden bzw. zu erhitzenden Formlingen angestrebt.

Zur Querumwälzung wird das im Ofen befindliche Gasgemisch von wenigstens einem insbesondere oberhalb und/oder seitlich der Züge befindlichen Lüfter angesaugt und vorzugsweise oberhalb einer Wandung oder Zwischendecke des Ofens in Querrichtung geleitet, um in Ofenstreckenlängsrichtung betrachtet seitlich der äußeren Ofenzüge nach unten geleitet zu werden und durch die Formlinge hindurch bzw. durch kleine Spalten zwischen den Formlingen wiederum einwärts hin zur Mitte der Ofenstrecke zu strömen. Durch die Verwendung eines oberhalb der Formlinge angeordneten Lüfters wird das natürliche Konvektionsbestreben des Gasgemisches unterstützt, um eine möglichst widerstandsfreie Strömung zu erhalten und den hierfür benötigten Arbeitsaufwand zu minimieren. Vorzugsweise ist der Lüfter als Radiallüfter ausgebildet und saugt Luft durch eine Ausnehmung einer Zwischendecke an, oberhalb derer die Luft dann zur Seite geleitet wird. Insbesondere wird die Luft strömungsoptimiert geleitet. Hierfür können vorzugsweise abgerundete Begrenzungen des Strömungskanals und der weitgehende Verzicht auf Abrißkanten oder dergl. Turbulenz verursachende Konturen Sorge tragen.

Die alternative oder ergänzende Anordnung eines oder mehrerer Lüfter seitlich der Ofenstrecke, insbesondere jeweils zumindest einer auf jeder Seite, kann zu besonders hohen Umwälzraten bei niedrigem Aufbau des Ofens führen. Vorteilhafterweise erfolgt eine Variation der Brennkurve über die Variation der Rate der querumgewälzten Luft in der Umwälzzone. Insbesondere kann die Brennkurve, d.h. die Temperatur der Formlinge entlang der Ofenstrecke, bei einer Mehrzahl von nebeneinander in der Umwälzzone angeordneten Umwälzkanälen variiert werden. Zusätzlich zur Variation der Brennkurve über die Schubzeit und die Garbrandtemperatur kann sich die Temperatur der (bereits gebrannten bzw. ungebrannten) Formlinge in der Umwälzzone als Funktion der (Quer-) Umwälzrate bzw. der Umwälzraten bei mehreren (Quer-)Umwälzkanälen ergeben. Die Umwälzrate wird bevorzugt durch die Steuerung der Lüfter variiert.

Zur Unterstützung der Umformung von organischem Material in Formlingen kann insbesondere in einem Temperaturbereich < 700° entlang der Ofenstrecke Sauerstoff zugeführt werden. Vorzugsweise wird hierfür Umgebungsluft verwendet. Der Anteil der zugeführten Luft liegt in der Größenordnung des längs der Ofenstrecke gerichteten Massenstroms. Ziel ist die Anhebung des Sauerstoffgehalts beispielsweise im Rauchgas von z.B. 3% auf 10% bis 15%. Eine Zuführung in der Umwälzzone kann alternativ oder ergänzend zu einer Zuführung von Sauerstoff im Brennraum erfolgen.

Die eingangs gestellte Aufgabe wird ebenfalls durch einen Ofen gelöst, der insbesondere zur Durchführung eines vor- oder nachbeschriebenen erfindungsgemäßen Verfahrens ausgebildet ist, und der sich dadurch auszeichnet, dass auf einer der ersten Seite und bezüglich der Brennzone gegenüberüberliegenden zweiten Seite der Ofenstrecke eine Bestückung der in die entgegengesetzte, zweite Richtung B zu bewegenden Formlinge vorgesehen ist. Die Formlinge sind beim erfindungsgemäßen Ofen in beide Richtungen jeweils unter Verzicht auf eine Richtungsumkehr durch die Brennzone hindurch bewegbar und jeweils am bezüglich ihrer Bestückung entgegengesetzten Ende der Ofenstrecke entnehmbar. Hierfür kann an beiden seitlichen Enden der Ofenstrecke jeweils eine Schleuse vorgesehen sein, durch die die Ofenwagen zu einer Bestückungs- und Entnahmevorrichtung gelangen, die vorzugsweise eine mit der Anzahl der Ofenzüge entsprechenden Gleisabschnittzahl versehene Schiebebühne aufweist. Auf die Gleisabschnitte der Schiebebühne können dann die ungebrannte bzw. gebrannte Formlinge aufweisenden Ofenwagen geschoben werden.

Die Ofenstrecke weist hierbei zwischen den bezüglich der Brennzone gegenüberliegenden Seiten der Ofenstrecke zwei Strahlungszonen und insbesondere zwei Umwälzzonen auf. In der Strahlungszone erfolgt gezielt keine durch Lüfter oder dgl. gestützte Querumwälzung der Luft, da der über Strahlung abgegebene Anteil der Wärme von den gebrannten Formlingen deutlich größer ist als ein über Umwälzung zwischen den zu kühlenden und zu erwärmenden Formlingen realisierbarer Wärmetransport. Gleichzeitig ist in den Umwälzzonen der Anteil der querumgewälzten Luft aufgrund der verwendeten Umwälzmittel, zumeist eines Lüfters, deutlich, d.h. mindestens eine Größenordnung, größer als der Anteil der in Richtung der Ofenstrecke längstransportierten Luft, wobei unter Luft ein entsprechendes Rauchgasgemisch gemeint ist, welches zu geringen Anteilen mit Umgebungsluft vermischt sein kann. Die Ofenstrecke eines erfindungsgemäßen Ofens weist einen Haupttunnel auf, in dem die Ofenwagen parallel verlaufender Ofenzüge bewegt werden können. Ausgehend von einem seitlichen Ende der Ofenstrecke können zunächst eine Umwälzzone, dann eine Strahlungszone und eine zentrale Brennzone vorhanden sein, auf der anderen Seite der Brennzone folgen anschließend wieder eine Strahlungs- und dann eine Umwälzzone. Nach dieser endet die Ofenstrecke. Typischerweise fahren die Ofenzüge auf Schienen durch ein Wasserbad. Durch die Mehrzahl von nebeneinander durch eine gemeinsame Brennzone und einen gemeinsamen Tunnel einander entgegengesetzt fahrenden Formlinge heizen die soeben aus der Brennzone gelangten Formlinge in der Strahlungszone die noch nicht in der Brennzone befindlichen Formlinge auf. Die bereits gebrannten kühlen sich ab. Durch die Querumwälzung der im Tunnel befindlichen Luft in der Umwälzzone und die dort im Querschnitt betrachtet angestrebte Temperaturgleichverteilung kühlen sich die bereits gebrannten weiter ab, während die ungebrannten sich langsam erwärmen. Durch den Verzicht auf eine Richtungsumkehr in der Brennzone ist die Vorrichtung technisch einfacher zu realisieren.

Gleichzeitig kann auf Kühlluftzuführung verzichtet werden, da die Kühlung der bereits gebrannten Formlinge in der Strahlungszone und in der Umwälzzone durch die ungebrannten Formlinge erfolgt. Es erfolgt keine gezielte Kühlung der gebrannten Formlinge durch zusätzliche Luftzufuhr. Entsprechend sind etwaige Absaugvorrichtung zum Absaugen von Rauchgas geringer dimensionierbar.

In der Umwälzzone ist wenigstens ein Lüfter zur Querumwälzung von vorhandenem Gas vorgesehen. Ein solcher Lüfter kann entweder in einer seitlichen Wandung des Haupttunnels oder auch in der Decke angeordnet sein. Insbesondere weist zumindest eine der Umwälzzonen jedoch wenigstens eine separate Wandung auf, über die wenigstens ein hauptsächlich quer zum Haupttunnel verlaufender Umwälzkanal von einem Haupttunnel der Ofenstrecke getrennt ist. In dieser Wandung kann dann der Lüfter mit einer Einströmseite zum Haupttunnel hin angeordnet sein. Eine oberhalb der Formlinge befindliche Wandung bzw. Decke und eine Anordnung des Lüfters oberhalb der Formlinge in dieser Decke unterstützt die Querumwälzung von ohnehin nach oben steigende Luft, die dann ggf. unter leichter Abkühlung an einer Außenwand des Ofens entlang des Umwälzkanals zu den Seiten hin transportiert und dort wiederum in den Haupttunnel oder durch einen weitere seitliche Kanalabschnitte unmittelbar seitlich des Haupttunnels in denselben eingeleitet werden kann.

Vorzugsweise sind in Ofenstreckenlängsrichtung eine Mehrzahl von Umwälzkanälen, die baulich voneinander getrennt sind, angeordnet. Insofern sind oberhalb des Haupttunnel unter Verwendung einer Zwischendecke oder außen liegender Kanäle z.B. in Form von Rohren eine Mehrzahl von Querkanälen ausgebildet, denen vorzugweise je zumindest ein Lüfter zugeordnet sind. Insbesondere die Verwendung einer Zwischendecke ermöglicht ein außen auf einfache Weise gut isolierbares System. Durch separate Ansteuerung der Lüfter kann Temperaturverteilung in der Ofenstrecke gesteuert und mithin eine Brennkurve des Ofens variierbar ausgebildet werden.

Vorteilhafterweise ist bei einem Ofen mit einer Mehrzahl von Lüftern in den jeweiligen Umwälzzonen die Anordnung der Lüfter dergestalt, dass diese entlang der Ofenstrecke versetzt zueinander sind. D.h., sie weisen unterschiedliche Abstände zu den Längsseiten der Ofenstrecke auf. Hierdurch wird eine verbesserte Gleichverteilung der Temperatur aufgrund von einer sämtliche Formlinge erreichenden Strömung erreicht.

Vorzugsweise sind an beiden Seiten der Ofenstrecke jeweils eine Beschickungs - und eine Entnahmevorrichtung angeordnet. Diese weisen vorzugsweise je eine Schiebebühne auf, die eine Mehrzahl von Ofenwagen seitlich zur Ofenstrecke versetzen können. Seitlich versetzt können dann die gebrannten Formlinge vom Ofenwagen abgeschoben oder anders entfernt und zu brennende Formlinge aufgebracht werden.

Weitere Vorteile und Einzelheiten der Erfindung sind der nachfolgenden Figurenbeschreibung zu entnehmen.

In den Figuren zeigt auf schematische Weise
Fig. 1 eine schematische Draufsicht auf einen Teil eines erfindungsgemäßen Ofens,
Fig. 2 einen Querschnitt durch einen weiteren erfindungsgemäßen Gegenstand,
Fig. 3 eine Teilansicht eines Schnitts III - III durch den erfindungsgemäßen Gegenstand gemäß Fig. 2,
Fig. 4 eine Beladungssituation,
Fig. 5 eine Entladungssituation,
Fig. 6 eine Brennkurve, die über die Variation der Querumwälzungsrate in den Umwälzzonen variiert ist.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

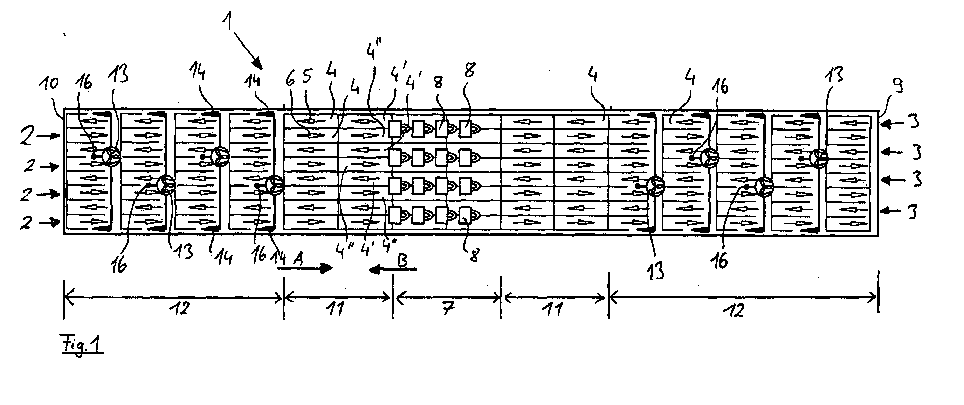

Fig. 1 zeigt eine schematische und teilweise perspektivische Draufsicht auf einen erfindungsgemäßen Gegenstand. Gezeigt ist eine allgemein mit 1 bezifferte Ofenstrecke, auf der insgesamt acht Ofenzüge angeordnet sind. In der Figurenebene fahren mit 2 bezifferte Ofenzüge in Richtung A, d.h. nach rechts, während mit 3 bezifferte Ofenzüge in Richtung B nach links fahren. Jeder Ofenzug 2,3 weist eine Mehrzahl von in Längsrichtung (A bzw. B) aneinander angeordneten Ofen- bzw. Herdwagen 4 auf, teilweise kenntlich gemacht durch Pfeile 5 bzw. 6. Die Ofenwagen 4 der Ofenzüge 2 werden auf der in der Figur linken Seite bestückt und auf der rechten Seite entnommen, die Wagen der mit 3 bezifferten Ofenzüge werden entsprechend auf der rechten Seite bestückt und auf der linken Seite entnommen.

Der Ofen weist eine mittlere Brennzone 7 auf, in der eine Vielzahl von Brennelementen 8 angeordnet ist. Beidseitig zu den seitlichen Enden 9 und 10 der Ofenstrecke hin schließen sich Strahlungszonen 11 an. Diese wiederum grenzen jeweils an eine Umwälzzone 12.

Während in der Brennzone 7 alle Formlinge erhitzt werden, dienen sowohl die Umwälzzonen wie auch die Strahlungszonen einerseits der Erwärmung der noch nicht gebrannten Formlinge sowie andererseits im selben Moment der Kühlung der bereits die Brennzone hinter sich gelassenen Formlinge. Ein Übergang von Formlingen in die Brennzone bzw. aus der Brennzone heraus erfolgt durch ein Verfahren der nebeneinander angeordneten Züge in entgegengesetzte Richtungen. Auf Ofenwagen 4' befindliche Formlinge, die während eines Schubs des Ofenzuges die Brennzone 7 verlassen haben, werden neben den auf dem Ofenwagen 4" befindlichen Formlingen positioniert und ein Wärmeübergang von den bereits gebrannten Formlingen auf die noch nicht gebrannten erfolgt.

Nachdem bereits gebrannte Formlinge in der Strahlungszone bis auf 700°C - 800 °C heruntergekühlt sind, treten sie nach mehrmaligem Verschieben der Züge in eine der Umwälzzonen 12 ein. In jeder der beiden Umwälzzonen 12 befinden sich deckenseitig Lüfter 13 mit oberhalb der Formlinge befindlichen Einströmöffnungen, die eine Querumwälzung der in dem Ofentunnel befindlichen Gase bewirken. Pfeile 14, die perspektivisch zu betrachten sind, zeigen an, dass von den Lüftern 13 transportierte Luft seitlich zu den Längsseiten der Ofenstrecke transportiert und dort weiter seitlich nach unten auf Höhe der Formlinge befördert wird. Die Anordnung der Lüfter ist leicht perspektivisch dargestellt, wobei ausgemalte kleine Kreise 16 der die Position eines Lüfters mit Bezug auf die Ebene der Formlinge andeuten. Eine Bestückung erfolgt auf beiden Seiten der Ofenstrecke und die Formlinge werden in beide Richtungen unter Verzicht auf eine Richtungsumkehr sowie eine Querversetzung durch die Brennzone hindurchbewegt und jeweils an dem bezüglich ihrer Bestückung entgegengesetzten Ende der Ofenstrecke dieser entnommen.

Die schematisch dargestellten Brennelemente 8 sind in den nicht näher dargestellten Längsgassen zwischen den Zügen angeordnet, können darüber hinaus jedoch auch oberhalb der Formlinge angeordnet sein. Durch die Wärmeübertragung von den gebrannten auf die ungebrannten Formlinge bzw. Ziegel müssen die bereits gebrannten Ziegel nicht extra gekühlt werden. Es erfolgt keine gesonderte Kühlluftzuführung. Ungeachtet dessen kann es sinnvoll sein, durch geringe Zuführung von Sauerstoff im vorbeschriebenen Masse den Sauerstoffgehalt des Rauchgas-/Luftgemisches auf 10% bis 15% anzuheben.

Während bei konventionellen Tunnelöfen das Verhältnis von quer umgewälzter Masse zu längs umgewälzter Masse pro Zeiteinheit ≤ 1 ist, ist bei den erfindungsgemäßen Öfen das Verhältnis der in einem Bereich der Umwälzzonen quer umgewälzten Luft/Rauchgas-Mischung zur längs der Ofenstrecke in Richtung A bzw. B transportierten Luft > 50. Für die Querumwälzung wird hierbei beispielsweise die durch einen der Lüfter 13 angesaugte und quer zur Längserstreckung der Ofenstrecke transportierte Luft betrachtet.

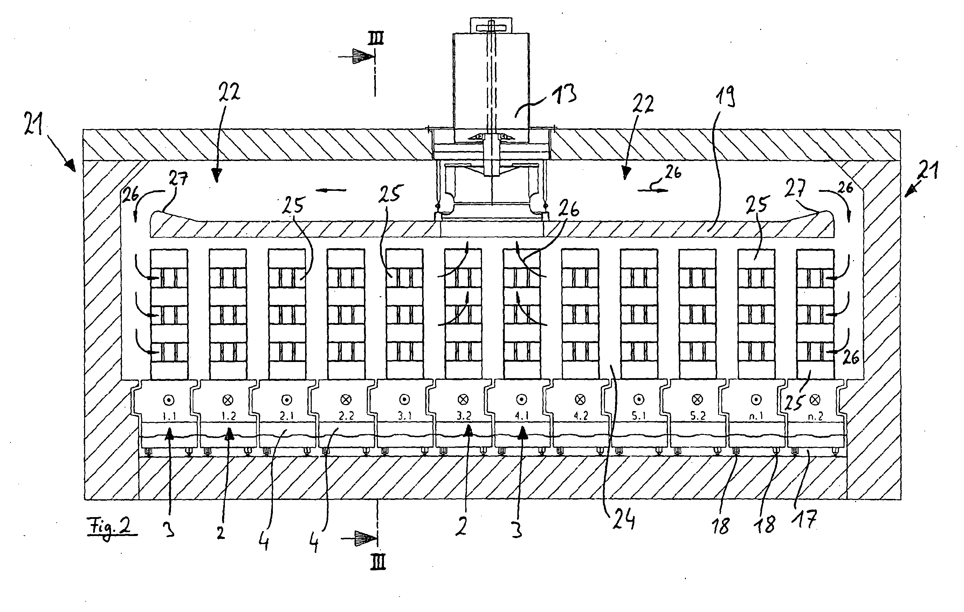

Fig. 2 zeigt einen Querschnitt in einer Umwälzzone eines weiteren erfindungsgemäßen Gegenstands. Im dargestellten Ausführungsbeispiel sind zwölf Ofenzüge 2, 3 nebeneinander angeordnet, wobei Ziffern 1.1, 1.2, 2,1, 2.2 bis n.2 die Nummerierung von Paaren von Schienen 18 darstellen. Alle Ofenzüge 2, 3 laufen in einem an sich bekannten Wasserbad 17 auf ebenfalls bekannten Schienen 18. Die Ofenwagen 4 weisen zueinander korrespondierende Seitenbereiche auf, um den Wärmeeintrag in das Wasserbad zu verringern.

In der Umwälzzone ist eine als Decke ausgebildete Wandung 19 vorhanden, durch die zu den Seiten 21 hin verlaufende Umwälzkanäle 22 ausgebildet werden. Durch einen als Radiallüfter ausgebildeten Lüfter 13 wird das im Haupttunnel 24 befindliche Rauchgas-/Luftgemisch in Richtung der Pfeile 26 transportiert. Durch die ansteigende und gerundete Formgebung der Zwischendecke an den Kanten 27 ist die Luftführung im Umwälzkanal verbessert, Abrißkanten, die zur Bildung von Luftwirbeln führen, werden vermieden. Durch den in etwa gitterförmigen Besatzaufbau der am äußersten linken bzw. rechten Rand des Haupttunnels 24 angeordneten Formlinge 25 wird eine Art Lüftungsgitter ausgebildet, so dass die umgewälzte Luft vergleichmäßigt durch die Formlinge hindurchströmen kann. In den Längsgassen zwischen den Formlingen einzelner entgegengesetzt zueinander fahrender Wagen/Züge können in der Brennzone Brennelemente bis zum untersten Formling angeordnet werden.

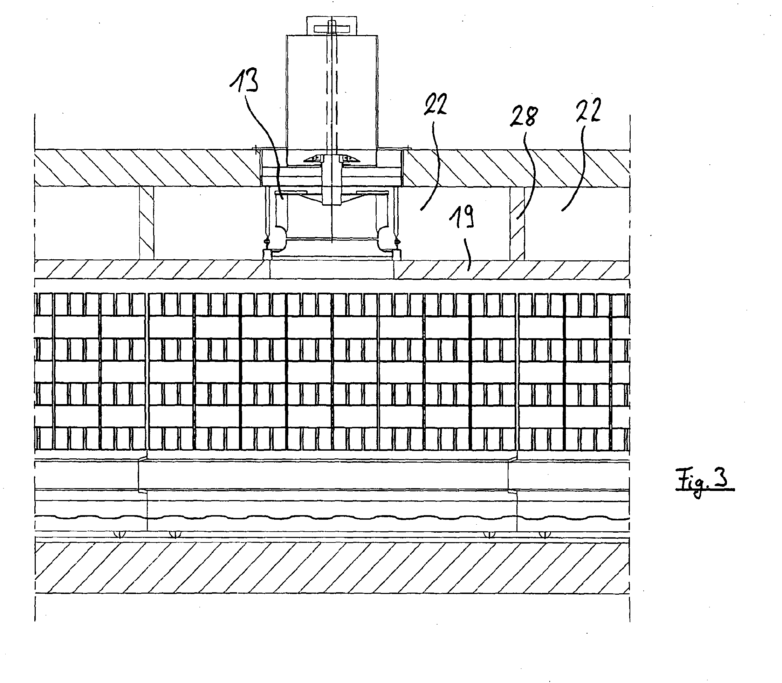

Fig. 3 zeigt den Querschnitt III - III nach Fig. 2. Dies in einer links und rechts geschnitten Ansicht. Ersichtlich sind benachbarte Umwälzkanäle 22 durch Seitenwände 28 voneinander getrennt. Im vorliegenden Ausführungsbeispiel ist jedem Umwälzkanal 22, der in Längsrichtung betrachtet eine Ofenwagenlänge lang ist, ein Lüfter zugeordnet.

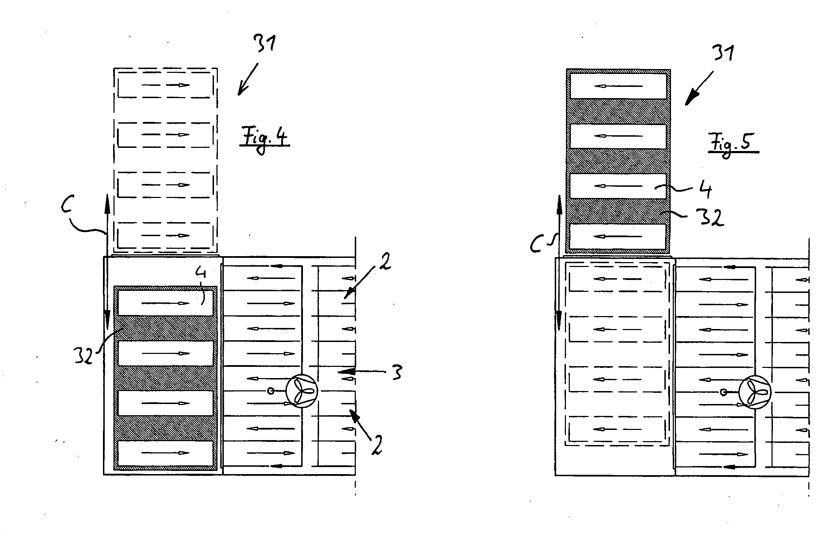

Fig. 4 zeigt die linke Seite der Ofenstrecke nach Fig. 1 in einer Beladungssituation und mit einer Beladungs und Entnahmevorrichtung 31. Durch eine acht Gleise aufweisende und quer in Richtungen C verfahrbare Schiebebühne 32 wird die Be- und Entladung der Ofenstrecke vorgenommen. In der gestrichelt dargestellten Situation werden die Ofenwagen mit ungebrannten Formlingen beladen. Anschließend verschiebt die Schiebebühne in Richtung C vor die entsprechenden Gleise (1.2, 2.2., 3.2., n.2) und die Ofenwagen können in die Züge 2 integriert werden.

Anschließend kann die Schiebebühne um einen Gleis versetzt in die in der Fig. 5 gestrichelt gezeichnete Position verfahren werden, um die mit bereits gebrannten Formlingen versehenen Ofenwagen aufzunehmen. Anschließend verfährt die Schiebebühne wieder in die in die in der Figur 5 durchgängig gezeichnete Position seitlich neben die Ofenstrecke. In dieser werden die fertigen Formlinge entnommen, woraufhin trockene Formlinge wieder auf die Wagen aufgebracht werden können. Der Eingang in die Ofenstrecke kann typischerweise mit einer Schleuse versehen werden.

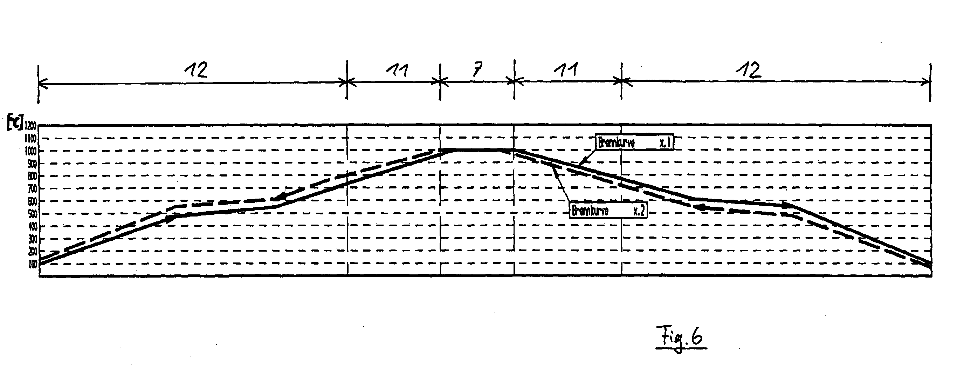

Fig. 6 zeigt den Verlauf zweier Brennkurven x.1 und x.2 als Funktion der Temperatur (in °C) entlang der Ofenstrecke. Gezeigt sind eine durchgezogene Linie für ein erstes Gleis, während die Brennkurve für ein benachbartes zweites Gleis gestrichelt dargestellt ist. In die jeweiligen Kurven eingezeichnete Pfeile zeigen die Bewegungsrichtung der Formlinge entlang des Gleises an. Die gestrichelt dargestellte Linie zeigt Formlinge an, die in der Figurenebene von rechts nach links bewegt werden.

In der Brennzone 7 zeigen beide Kurven identische Temperaturen für die Formlinge an, in den Strahlungszonen 11 fallen die Temperaturen gleichmäßig ab. Beidseitig der Strahlungszonen 11 weisen die Kurven ein durch die entsprechend eingestellte Lüfter zur Querumwälzung der Luft in den Umwälzzonen 12 ein Plateau auf, durch welches beispielsweise Umsetzungsprozesse von organischem Material in den Formlingen verbessert gesteuert werden können. Eine Entnahme der Formlinge auf beiden Seiten der Ofenstrecke erfolgt bei Temperaturen meist unterhalb von 120 °C.

Der Brennraum eines erfindungsgemäßen Ofens kann auch als externer Brennraum mit Energieträgern jeglicher Art, beispielsweise mit Pellets oder verbrennbarem Müll, betrieben werden, was die Energiebilanz des Ofens weiterhin verbessern kann.

## Patentansprüche

1. Verfahren zum Brennen von keramischen Formlingen (25), insbesondere von Ziegeln, in einem Ofen und durch Führen einer Mehrzahl von in parallel zueinander verlaufenden Zügen befindlichen Formlingen entlang einer längsverlaufenden Ofenstrecke (1) mit einer Brennzone (7), in der eine Erhitzung der Formlinge (25) stattfindet, wobei nebeneinander angeordnete Züge (2,3) in entgegengesetzte Richtungen (A, B) verfahren und die Bestückung des Ofens mit in einer ersten Richtung (A) zu bewegenden Formlingen (25) auf einer ersten Seite (10) der Ofenstrecke (1) erfolgt, wobei auf einer der ersten Seite (10) und bezüglich der Brennzone (7) gegenüberliegenden zweiten Seite (9) der Ofenstrecke (1) eine Bestückung der in die entgegengesetzte, zweite Richtung (B) zu bewegenden Formlinge (25) erfolgt, die Formlinge (25) jeweils unter Verzicht auf eine Richtungsumkehr durch die Brennzone (7) hindurch bewegt und jeweils am bezüglich ihrer Bestückung entgegengesetzten Ende (9,10) der Offenstrecke dieser entnommen werden, **dadurch gekennzeichnet, dass** in sich entlang der Ofenstrecke (1) auf beiden Seiten der Brennzone (7) anschließenden, insbesondere jeweils mehrere Ofenwagen (4) langen Strahlungszonen (11) die noch vor der Brennzone (7) befindlichen Formlinge (25) eines Zuges durch Strahlungswärme der bereits die Brennzone (7) verlassenden Formlinge (25) des benachbarten und sich in entgegengesetzter Richtung bewegenden Ofenzuges erhitzt werden, wobei ein in die eine Richtung bewegbarer Ofenzug auf zwei Seiten von in die entgegengesetzte Richtung bewegbaren Ofenzügen begrenzt ist.

2. Verfahren nach Anspruch 1, **dadurch gekennzeichnet, dass** die Formlinge (25) in der Brennzone (7) durch zumindest ein in einer Längsgasse zwischen den Zügen (2,3) angeordnetes Heizelement (8) erhitzt werden.

3. Verfahren nach Anspruch 1 oder 2, **dadurch gekennzeichnet, dass** die Formlinge in der Brennzone (7) durch zumindest ein/das direkt oberhalb der Längsgassen angeordnetes Heizelement (8) erhitzt werden.

4. Verfahren nach einem der vorherigen Ansprüche, **dadurch gekennzeichnet, dass** die Erhitzung unter Verzicht von entlang der Ofenstrecke (1) durch die Brennzone (7) hindurch geführter Kühlluft erfolgt.

5. Verfahren nach einem der vorherigen Ansprüche, **dadurch gekennzeichnet, dass** in beidseits der Brennzone (7) befindlichen Umwälzzonen (12) Luft quer zur Ofenstreckenlängsrichtung umgewälzt wird.

6. Verfahren nach Anspruch 5, **dadurch gekennzeichnet, dass** die Luft zur Querumwälzung von einem oberhalb oder seitlich der Züge (2,3) befindlichen Lüfter (13) angesaugt und insbesondere oberhalb einer Zwischendecke (19) des Ofens in Querrichtung geleitet wird, um in Ofenstreckenlängsrichtung betrachtet seitlich der äußeren Ofenzüge nach unten geleitet zu werden und durch die Formlinge (25) einwärts zu strömen.

7. Verfahren nach Anspruch 5 oder 6, **dadurch gekennzeichnet, dass** das Verhältnis von quer umgewälzten Gasmassenstrom zum längs der Ofenstrecke gerichteten Gasmassenstrom größer 10 ist.

8. Verfahren nach einem der Ansprüche 5 bis 7, **dadurch gekennzeichnet, dass** eine Variation der Brennkurve über die Variation der Rate der quer umgewälzten Luft erfolgt.

9. Verfahren nach einem der vorherigen Ansprüche, **dadurch gekennzeichnet, dass** zur Unterstützung der Umformung von organischem Material im Formling in einem Temperaturbereich < 700 °C entlang der Ofenstrecke (1) Sauerstoff hinzugeführt wird.

10. Ofen zum Brennen von keramischen Formlingen (25), insbesondere von Ziegeln, und bevorzugt zur Durchführung eines Verfahren nach einem der vorherigen Ansprüche, mit einer Mehrzahl von in parallel zueinander und entlang einer längsverlaufenden Ofenstrecke (1) bewegbaren, mehrere Ofenwagen (4) umfassenden Zügen (2,3), auf denen die Formlinge (25) anzuordnen sind, wobei die Ofenstrecke (1) eine Brennzone (7) zur Erhitzung der Formlinge (25) aufweist und wobei nebeneinander angeordnete Züge (2,3) in entgegengesetzten Richtungen (A, B) bewegbar sind und der Ofen auf einer ersten Seite (10) der Ofenstrecke (1) zur Bestückung des Ofens mit in einer ersten Richtung (A) zu bewegenden Formlingen (25) vorgesehen ist, wobei der Ofen auf einer der ersten Seite (10) und bezüglich der Brennzone (7) gegenüberliegenden zweiten Seite (9) der Ofenstrecke zur Bestückung mit den in die entgegengesetzte, zweite Richtung (B) zu bewegenden Formlingen (25) ausgebildet ist, die Formlinge (25) jeweils unter Verzicht auf eine Richtungsumkehr durch die Brennzone (7) hindurch bewegbar und jeweils am bezüglich ihrer Bestückung entgegengesetzten Ende der Offenstrecke entnehmbar sind, **dadurch gekennzeichnet, dass** zwischen den bezüglich der Brennzone (7) gegenüberliegenden Seiten (10,9) der Ofenstrecke (1) zwei Strahlungszonen (11) angeordnet sind, wobei ein in die eine Richtung bewegbarer Ofenzug auf zwei Seiten von in die entgegengesetzte Richtung bewegbaren Ofenzügen begrenzt ist.

11. Ofen nach Anspruch 10, **dadurch gekennzeichnet, dass** zwischen den bezüglich der Brennzone gegenüberliegenden Seiten (10,9) der Ofenstrecke (1) zwei Umwälzzonen (12) angeordnet sind.

12. Ofen nach Anspruch 11, **dadurch gekennzeichnet, dass** in den Umwälzzonen (12) wenigstens ein Lüfter (13) zur Querumwälzung von vorhandenem Gas vorgesehen ist.

13. Ofen nach Anspruch 11 oder 12, **dadurch gekennzeichnet, dass** zumindest eine der Umwälzzonen wenigstens eine separate Wandung (19) aufweist, über die wenigstens ein Umwälzkanal (22) von einem Haupttunnel (24) der Ofenstrecke (1) getrennt ist.

14. Ofen nach Anspruch 13, **gekennzeichnet durch** eine Mehrzahl von quer zur Ofenstreckenlängsrichtung verlaufenden Umwälzkanälen (22), die baulich voneinander getrennt sind.

15. Ofen nach einem der Ansprüche 11 bis 14 mit einer Mehrzahl von Lüftern, **dadurch gekennzeichnet, dass** die Lüfter (13) entlang der Ofenstrecke (1) versetzt zueinander angeordnet sind.

16. Ofen nach einem der Ansprüche 10 bis 15, **dadurch gekennzeichnet, dass** an den beiden Seiten (10,9) der Ofenstrecke jeweils eine Beschickungs- und Entnahmevorrichtung (31) angeordnet ist, die vorzugsweise jeweils mittels einer Schiebebühne (32) eine Mehrzahl von Ofenwagen seitlich zur Ofenstrecke versetzen können.

## Claims

1. Method for firing ceramic blanks (25), in particular bricks, in a furnace and by guiding a plurality of blanks arranged in trains extending parallel to one another along a longitudinal furnace section (1) having a firing zone (7) in which the blanks (25) are heated, trains (2, 3) arranged side by side moving in opposite directions (A, B) and the furnace being loaded with blanks (25) to be moved in a first direction (A) on a first end (10) of the furnace section, the blanks (25) to be moved in a second, opposite direction (B) being loaded on the second end (9) of the furnace section (1) opposite the first end (10) with respect to the firing zone (7) and the blanks (25) each being moved through the firing zone (7) without a reversal of direction and each being unloaded from the furnace section at the opposite end (9, 10) from the end at which they were loaded, **characterised in that** in radiation zones (11), which are connected along the furnace section (1) to both sides of the firing zone (7) and in particular are several furnace cars (4) long, the blanks (25) in a train which are still upstream of the firing zone (7) are heated by radiation from blanks (25) which are already leaving the firing zone (7) in the adjacent furnace train moving in the opposite direction, a furnace train which is movable in one direction being delimited on both sides by furnace trains which are movable in the opposite direction.

2. Method according to claim 1, **characterised in that** the blanks (25) are heated in the firing zone (7) by at least one heating element (8) arranged in a longitudinal channel between the trains (2, 3).

3. Method according to either claim 1 or claim 2, **characterised in that** the blanks are heated in the firing zone (7) by at least one/the heating element (8) arranged directly above the longitudinal channels.

4. Method according to any of the preceding claims, **characterised in that** the heating is performed without cooling air guided along the furnace section (1) through the firing zone (7).

5. Method according to any of the preceding claims, **characterised in that** air is circulated transversely to the longitudinal direction of the furnace section in circulation zones (12) in both ends of the firing zone (7).

6. Method according to claim 5, **characterised in that** the air for cross-circulation is drawn in by a fan (13) situated above or at the side of the trains (2, 3) and is directed in particular above an intermediate ceiling (19) in the furnace in the transverse direction in order, when viewed in the longitudinal direction of the furnace section, to be directed downwards at the sides of the outer furnace trains and to flow inwards through the blanks (25).

7. Method according to either claim 5 or claim 6, **characterised in that** the ratio of the transversely circulating gas mass flow to the gas mass flow that is directed in the longitudinal direction of the furnace section is greater than 10.

8. Method according to any of claims 5 to 7, **characterised in that** the firing curve is varied over the variation in the rate of transversely circulated air.

9. Method according to any of the preceding claims, **characterised in that** oxygen is added along the furnace section (1) to support the conversion of organic material in the blank in a temperature range of < 700 °C.

10. Furnace for firing ceramic blanks (25), in particular bricks, and preferably for carrying out a method according to any of the preceding claims, comprising a plurality of trains (2, 3) comprising a plurality of furnace cars (4) movable in parallel with one another and along a longitudinal furnace section (1), the blanks (25) being intended to be arranged on these trains, the furnace section (1) comprising a firing zone (7) for heating the blanks (25) and trains (2, 3) arranged side by side being movable in opposite directions (A, B) and the furnace being provided with blanks (25) to be moved in a first direction (A) on a first end (10) of the furnace section (1) for loading the furnace, the furnace being formed on a second end (9) of the furnace section which is opposite the first end (10) and the firing zone (7) with respect to the furnace section for loading with the blanks (25) to be moved in the opposite second direction (B), the blanks (25) each being movable through the firing zone (7) without a reversal of direction and each being removable at the opposite end of the furnace section from the end at which they were loaded, **characterised in that** two radiation zones (11) are arranged between the ends (10, 9) of the furnace section (1) opposite the firing zone (7), a furnace train which is movable in one direction being delimited on two sides by furnace trains which are movable in the opposite direction.

11. Furnace according to claim 10, **characterised in that** two circulation zones (12) are arranged between the opposite ends (10, 9) of the furnace section (1) with respect to the firing zone.

12. Furnace according to claim 11, **characterised in that** at least one fan (13) is provided in the circulation zones (12) for cross-circulation of gas therein.

13. Furnace according to either claim 11 or claim 12, **characterised in that** at least one of the circulation zones has at least one separate wall (19) by which at least one circulation channel (22) is separated from a main tunnel (24) of the furnace section (1).

14. Furnace according to claim 13, **characterised by** a plurality of circulation channels (22) extending transversely to the longitudinal direction of the furnace section and being structurally separated from one another.

15. Furnace according to any of claims 11 to 14 comprising a plurality of fans, **characterised in that** said fans (13) are arranged so as to be offset from one another along the furnace section (1).

16. Furnace according to any of claims 10 to 15, **characterised in that** a loading- and unloading device (31) is arranged at each of the two ends (10, 9) of the furnace section and can each preferably displace a plurality of furnace cars laterally relative to the furnace section by means of a shifting platform (32).

## Revendications

1. Procédé de cuisson d'ébauches en céramique (25), notamment de briques, dans un four et en guidant de multiples ébauches se trouvant dans des trains qui s'étendent parallèlement les uns aux autres le long d'une section de four (1) qui s'étend dans le sens de la longueur et qui comporte une zone de cuisson (7) dans laquelle se produit un chauffage des ébauches (25),
selon lequel on déplace des trains (2, 3) agencés les uns à côté des autres dans des directions opposées (A, B) et on réalise une alimentation du four avec des ébauches (25) à déplacer dans une première direction (A) d'un premier côté (10) de la section de four (1),
selon lequel, du deuxième côté (9) de la section de four (1) qui est situé à l'opposé du premier côté (10) par rapport à la zone de cuisson (7), on réalise une introduction des ébauches (25) à déplacer dans la deuxième direction (B) opposée, on fait passer les ébauches (25) à travers la zone de cuisson (7) à chaque fois en renonçant à inverser la direction d'avance et on les retire de la section de four à chaque fois à celle des extrémités (9, 10) de la section de four qui est à l'opposé de celle de leur introduction,
**caractérisé en ce que**, dans des zones de rayonnement (11) qui se trouvent à la suite des deux côtés de la zone de cuisson (7) le long de la section de four (1) et qui ont une longueur correspondant à chaque fois à plusieurs chariots de four (4), les ébauches (25) d'un train qui se trouvent encore avant la zone de cuisson (7) sont chauffées par le rayonnement thermique des ébauches (25) qui font partie du train de four voisin se déplaçant dans la direction opposée et qui quittent déjà la zone de cuisson (7), un train de four pouvant se déplacer dans une certaine direction étant alors voisin, des deux côtés, de trains de four pouvant se déplacer dans la direction opposée.

2. Procédé selon la revendication 1, **caractérisé en ce que** les ébauches (25) sont chauffées dans la zone de cuisson (7) par au moins un élément de chauffage (8) agencé dans une voie longitudinale entre les trains (2, 3) .

3. Procédé selon la revendication 1 ou 2, **caractérisé en ce que** les ébauches sont chauffées dans la zone de cuisson (7) par au moins un élément de chauffage (8) agencé directement au-dessus des voies longitudinales.

4. Procédé selon l'une des revendications précédentes, **caractérisé en ce que** le chauffage s'effectue sans air frais passant dans la zone de cuisson (7) le long de la section de four (1).

5. Procédé selon l'une des revendications précédentes, **caractérisé en ce que** l'on fait circuler de l'air transversalement par rapport à la direction longitudinale de la section de four dans des zones de circulation d'air (12) situées de chaque côté de la zone de cuisson (7).

6. Procédé selon la revendication 5, **caractérisé en ce que** l'air destiné à une circulation d'air transversale est aspiré par un ventilateur (13) situé au-dessus des trains (2, 3) ou sur le côté de ceux-ci et il est conduit transversalement notamment au-dessus d'un plafond intermédiaire (19) du four pour être guidé vers le bas, vu dans la direction longitudinale de section de four, sur le côté des trains de four extérieurs et pour passer à travers les ébauches (25).

7. Procédé selon la revendication 5 ou 6, **caractérisé en ce que** le rapport du flux massique de gaz circulant transversalement au flux massique de gaz dirigé dans le sens de la longueur de la section de four est supérieur à 10.

8. Procédé selon l'une des revendications 5 à 7, **caractérisé en ce qu'**une modification de la courbe de cuisson est effectuée par l'intermédiaire d'une modification du débit d'air circulant transversalement.

9. Procédé selon l'une des revendications précédentes, **caractérisé en ce que** de l'oxygène est introduit en plus pour aider à la transformation de la matière organique dans les ébauches dans une plage de température < 700 °C le long de la section de four (1).

10. Four pour la cuisson d'ébauches en céramique (25), notamment de briques, et de préférence pour la mise en oeuvre d'un procédé selon l'une des revendications précédentes, avec de multiples trains (2, 3) qui sont déplaçables parallèlement les uns aux autres et le long d'une section de four (1) s'étendant longitudinalement, qui comprennent plusieurs chariots de four (4) et sur lesquels les ébauches (25) doivent être placées,
dans lequel la section de four (1) comporte une zone de cuisson (7) pour chauffer les ébauches (25),
dans lequel des trains (2, 3) agencés les uns à côté des autres sont déplaçables dans des directions opposées (A, B),
dans lequel le four est prévu pour être alimenté d'un premier côté (10) de la section de four (1) avec des ébauches (25) à déplacer dans une première direction (A),
dans lequel le four est conçu d'un deuxième côté (9) de la section de four qui est situé à l'opposé du premier côté (10) par rapport à la zone de cuisson (7) pour être alimenté avec des ébauches (25) à déplacer dans la deuxième direction (B) opposée,
et dans lequel les ébauches (25) peuvent être déplacées à travers la zone de cuisson (7) à chaque fois sans inversion de direction d'avance et peuvent être prélevées à chaque fois à celle des extrémités de la section de four qui est à l'opposé du côté d'introduction respectif,
**caractérisé en ce que** deux zones de rayonnement (11) sont agencées entre les côtés (10, 9) , qui sont à l'opposé l'un de l'autre par rapport à la zone de cuisson (7), de la section de four (1), un train de four déplaçable dans une direction étant alors voisin, des deux côtés, de trains de four déplaçables dans la direction opposée.

11. Four selon la revendication 10, **caractérisé en ce que** deux zones de circulation de gaz (12) sont agencées entre les côtés (10, 9), qui sont à l'opposé l'un de l'autre par rapport à la zone de cuisson, de la section de four (1).

12. Four selon la revendication 11, **caractérisé en ce que**, dans les zones de circulation de gaz (12), au moins un ventilateur (13) est prévu pour faire circuler transversalement le gaz présent.

13. Four selon la revendication 11 ou 12, **caractérisé en ce qu'**au moins l'une des zones de circulation de gaz comporte au moins une paroi séparée par laquelle au moins un canal de circulation de gaz (22) est séparé d'un tunnel principal (24) de la section de four (1).

14. Four selon la revendication 13, **caractérisé par** de multiples canaux de circulation de gaz (22) qui s'étendent transversalement par rapport au sens de la longueur de la section de four et qui sont séparés les uns des autres du point de vue de la construction.

15. Four selon l'une des revendications 11 à 14, avec de multiples ventilateurs, **caractérisé en ce que** les ventilateurs (13) sont agencés décalés les uns par rapport aux autres le long de la section de four (1).

16. Four selon l'une des revendications 10 à 15, **caractérisé en ce qu'**un dispositif d'alimentation et de prélèvement (31) est agencé à chaque fois des deux côtés (10, 9) de la section de four, lesquels dispositifs peuvent de préférence déplacer plusieurs chariots de four latéralement par rapport à la section de four à chaque fois au moyen d'un chariot transbordeur (32).
